# EUROPEAN PATENT APPLICATION

(11) **EP 2 312 284 A1**
(43) Date of publication of application: **20.04.2011**
(21) Application number: 09802813.7
(22) Date of filing: 29.06.2009
(51) Int. Cl.: G01G 11/00, B07C 5/18

(54) **WEIGHT INSPECTING DEVICE**

(30) Priority: 31.07.2008 JP 2008198416
(71) Applicant: Ishida Co., Ltd., Sakyo-ku Kyoto-shi Kyoto 606-8392 (JP)
(72) Inventor: NAIKI, Tatsuya, Ritto-shi Shiga 520-3026 (JP); MAKINO, Koichi, Ritto-shi Shiga 520-3026 (JP)
(74) Representative: Kastel, Stefan
(86) International application number: PCT/JP2009/061877
(87) International publication number: WO 2010/013568

(57) **Abstract**

A weight checker (3) comprises a conveying device (13) for conveying, in a predetermined direction, products (P) whose weight is to be checked; a load cell (15) for weighing the products (P) conveyed in the conveying device (13) (in a second conveying part (13b)); and a control part (20) for controlling conveying in the conveying device (13). The control part (20) performs a control so that the speed of conveying in the conveying device (13) is reduced according to a conveying condition of the upstream products (P).

## Description

### TECHNICAL FIELD

The present invention relates to a weight-checking apparatus for checking the weight of an object to be checked, the apparatus being positioned in, e.g., a form-fill-seal system.

### BACKGROUND ART

A weight-checking apparatus for checking whether the weight of an object is within a predetermined range is conventionally positioned in production lines for separating and wrapping objects within a predetermined range of weight values.

For example, disclosed in Patent Document 1 (Japanese Laid-Open Patent Application No. 2006-322750) is a weight-checking apparatus that includes a plurality of conveyors for weighing and sorting objects to be checked into defective and non-defective products while conveying the objects.

### SUMMARY OF THE INVENTION

### <Problems to be Solved by the Invention>

However, problems such as those given below are presented by the aforedescribed conventional weight-checking apparatus.

Specifically, measures for power conservation are not given particular consideration in the weight-checking apparatus disclosed in the aforementioned document, and therefore the plurality of conveyors continue to operate constantly even when objects to be checked are not coming, and unnecessary electrical power may be expended.

It is an object of the present invention to provide a weight-checking apparatus that can reduce unnecessary electrical power consumption and achieve power conservation using a simple configuration.

### <Means for Solving the Aforementioned Problems>

A weight-checking apparatus according to a first aspect of the present invention is an apparatus for checking weight while conveying an object to be checked in a predetermined direction and comprises a weighing part and a control part. A conveying part conveys the object to be checked in the predetermined direction. The weighing part weighs the object to be checked. The control part for controls the conveying part so that speed is reduced to a predetermined conveying speed according to a conveyance condition of the object to be checked, the object being conveyed from upstream.

The weight-checking apparatus here is, e.g., positioned as one of the apparatuses that constitute, e.g., a production system for food or other products. The weight-checking apparatus uses a plurality of the conveying parts to check weight while conveying the object to be checked, in which a control is performed so that the conveying speed in the conveying parts is reduced according to the conveyance condition; e.g., when the object to be checked has not come from upstream for a period of time equal to or greater than a predetermined period.

The aforementioned weight checks include, e.g., checking whether the object to be checked is within a predetermined weight range and/or ranking and sorting according to weight value. The control part also performs control for, e.g., stopping conveyance when the conveying speed of the conveying parts decreases to a predetermined value. The conveying parts that are the objects of control may include, e.g., an uptake conveyor, a weighing conveyor, a sorting conveyor, and/or a plurality of other conveyors, or a single conveyor may be the object of control. The conveyance condition of the object to be checked may include, e.g., a state in which the object to be checked has not been conveyed from upstream for a period of time equal to or greater than a predetermined period. Detection of the conveyance condition of the object to be checked may involve positioning phototubes or other sensors within the apparatus and detecting directly, or may involve receiving results detected in various apparatuses that are positioned upstream and constitute, e.g., the production system for the products, and detecting indirectly.

Situations in which the conveying parts continue to operate at a set conveying speed irrespective of the length of time since the object to be checked has been conveyed from the various apparatuses positioned upstream can thereby be avoided. As a result, the consumption of unnecessary electrical power can be reduced during periods in which the apparatus is not functioning as a weight-checking apparatus, and power conservation can be significantly improved over the conventional technology.

A weight-checking apparatus according to a second aspect of the present invention is the weight-checking apparatus according to the first aspect of the present invention, wherein the predetermined conveying speed also includes a stopped state.

The control part in this instance also performs a control so that conveyance in the conveying parts is temporarily stopped when the object to be checked has not been conveyed for a period of time equal to or greater than the predetermined period.

More effective power-conservation control can thereby be implemented when the object to be checked is not being conveyed from upstream.

A weight-checking apparatus according to a third aspect of the present invention is the weight-checking apparatus according to the first or second aspect of the present invention, wherein the control part performs a control while selectively switching between a mode for reducing conveying speed and a mode for stopping conveying, the conveying speed being reduced by the conveying part in the mode for reducing conveying speed, and conveying being stopped by the conveying part in the mode for stopping conveying.

Power-conservation control is performed in this instance while selective discrimination is performed between a control for decreasing the conveying speed to a predetermined speed and a control for temporarily stopping conveyance, according to, e.g., the conveyance condition of the object to be checked.

If the conveyance condition of the object to be checked is such that breaks in conveyance are rare, a control for switching to a slower speed without stopping can thereby be performed, and if the state is such that long breaks in conveyance are frequent, a control can thereby be performed for stopping conveyance. As a result, power-conservation control can be more effectively implemented according to the conveyance condition of the object to be checked.

A weight-checking apparatus according to a fourth aspect of the present invention is the weight-checking apparatus according to any of the first through third aspects of the present invention, wherein the control part performs a control so that an electrical power supply is maintained to the weighing part irrespective of the conveyance condition of the object to be checked.

A control is performed in this instance so that electrical power is continuously supplied to the weighing part, which includes a load cell and/or a drive substrate, without relation to the conveyance condition of the object to be checked.

When electrical power supply to the load cell and/or driving substrate that are included in the weighing part of the weight-checking apparatus is temporarily stopped and then restarted, the weighing environment, which includes the temperature and the like, changes and may cause measurement errors.

The weighing part, which is affected by measurement errors during weighing, is thereby not included as an object of power-conservation control, whereby a weight-checking apparatus can be obtained in which errors during measurement can be minimized, and power conservation can be achieved.

A weight-checking apparatus according to a fifth aspect of the present invention is the weight-checking apparatus according to any of the first through fourth aspects of the present invention, wherein the conveying part comprises an uptake conveyor, a weighing conveyor, and a sorting conveyor.

Conveyors for uptake, weighing, and sorting are used as a plurality of conveying parts included in the weight-checking apparatus in this instance.

The object to be checked is conveyed from the various apparatuses positioned upstream, and the uptake conveyor takes the object into the weight-checking apparatus. The weighing conveyor measures the weight of the object to be checked that has been taken into the apparatus. The sorting conveyor sorts the object to be checked to a predetermined direction according to the results of the weight check.

The driving of each of the conveyors having different respective functions can thereby be temporarily stopped during periods when the object to be checked is not conveyed from upstream, whereby power conservation can be achieved while fulfilling the functions of the weight-checking apparatus.

A weight-checking apparatus according to a sixth aspect of the present invention is the weight-checking apparatus according to any of the first through fifth aspects of the present invention, further comprising a detection part for directly detecting the object to be checked, the object being conveyed from upstream.

In this instance, e.g., a phototube or other sensor is used, and the arrival of the object to be checked is detected directly.

Such a detection part may be positioned near the entrance of the conveying part positioned furthest upstream.

The object to be checked that has been conveyed from the various apparatuses positioned upstream can thereby be reliably detected using a simple configuration.

A weight-checking apparatus according to a seventh aspect of the present invention is the weight-checking apparatus according to any of the first through sixth aspects of the present invention, further comprising a detection part for receiving detection results for the object to be checked in a variety of apparatuses positioned upstream and for indirectly detecting the object to be checked, the object being conveyed from upstream.

In this instance, e.g., results detected in other upstream apparatuses that constitute the production system for food and the like are received, and the movement from upstream of the object to be checked is detected indirectly.

The object to be checked can thereby be detected earlier than in cases of direct detection within the weight-checking apparatus. The object to be checked that has been conveyed from upstream therefore does not accumulate near the uptake port of the apparatus and can be smoothly taken into the apparatus.

A weight-checking apparatus according to an eighth aspect of the present invention is the weight-checking apparatus according to any of the first through seventh aspects of the present invention, further comprising a display part for making a display related to checks performed on the object to be checked. The control part stops electrical power supply to the display part until the object to be checked is conveyed from upstream.

A control is performed in this instance so that when the object to be checked is not being conveyed from upstream, supply of electrical power to a monitor or other display part for making displays related to the checks performed on the object is also stopped.

Checks are not performed on the object to be checked when the object is not being conveyed, and therefore having the display part continue to display is considered to have little purpose.

The objects of power-conservation control are thereby expanded from the conveying parts to the display part, whereby power conservation for the apparatus can be achieved even more effectively.

### BRIEF DESCRIPTION OF THE DRAWINGS

FIG. 1 is an overall view that shows the configuration of a production system that includes a weight checker according to an embodiment of the present invention.
FIG. 2 is a block diagram that shows the apparatuses that constitute the production system of FIG. 1.
FIG. 3 is a front view that shows the configuration of the weight checker included in the production system of FIG. 1.
FIG. 4 is a plan view that shows the configuration of the weight checker of FIG. 3.
FIG. 5 is an enlarged view that shows a more detailed configuration of the weight checker of FIGS. 3 and 4.
FIG. 6 is a time chart that shows particulars of speed-reduction control of the weight checker of FIG. 5 et al.
FIG. 7 is a front view that shows the configuration of a weight checker according to another embodiment of the present invention.
FIG. 8 is a time chart that shows particulars of speed-reduction control of the weight checker of FIG. 7.
FIG. 9 is a front view that shows the configuration of a weight checker according to a further embodiment of the present invention.

### DESCRIPTION OF EMBODIMENTS

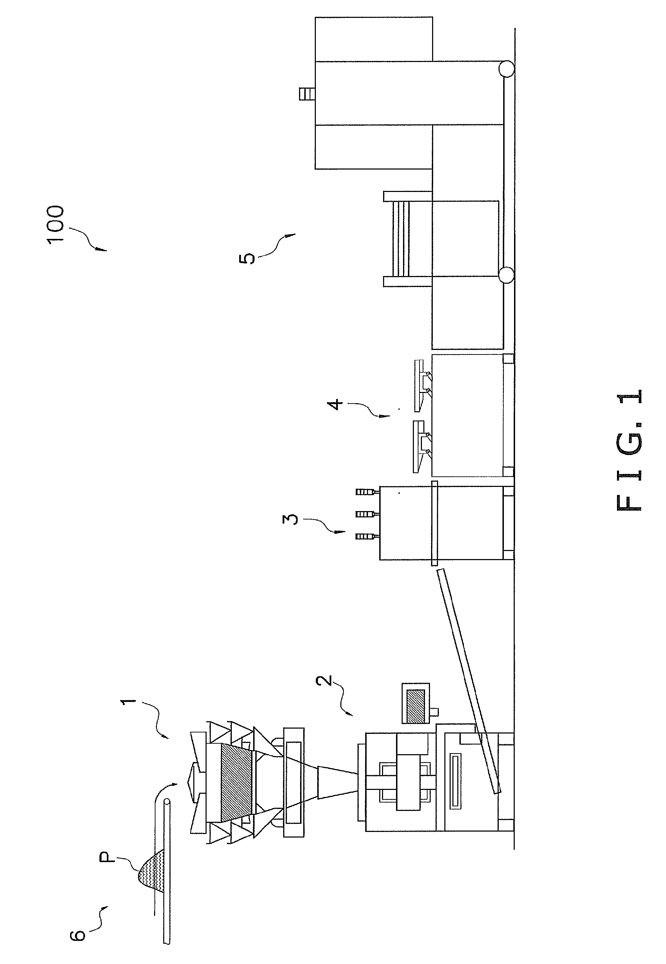

A weight-checking apparatus according to an embodiment of the present invention is described below with reference to FIGS. 1 through 6.

### [Configuration of production system 100]

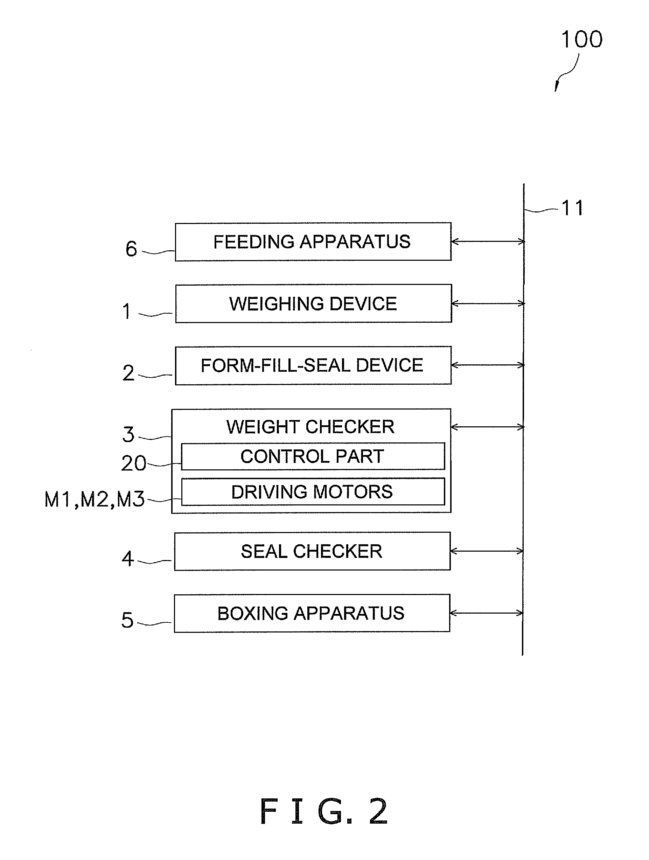

As shown in FIGS. 1 and 2, a production system 100 according to the present embodiment is provided with a production line that includes a weighing device 1, a form-fill-seal device 2, a weight checker (weight-checking apparatus) 3, a seal checker 4, and a boxing apparatus 5. The production system is also provided with a feeding apparatus 6. The apparatuses 1 through 6 operate in a mutually continuous and linked fashion using respective conveyors and the like. The apparatuses weigh, wrap, and ship out objects (products (objects to be checked) P) fed from the feeding apparatus 6. The apparatuses 1 through 6 are mutually connected via a communication line 11, as shown in FIG. 2, and send and receive various signals, data, and other information.

The weighing device 1 receives and weighs the products P fed from the feeding apparatus 6, and performs combinatorial weighing using the weighing results. The weighing device 1 also performs combinatorial calculations on the basis of the weighing results of a variety of weighing hoppers and selects a combination such that the combined weight has a value within a predetermined permissible range. The products P pertaining to the combination are then ejected from within the weighing hoppers, gathered together, and then subdivided into smaller groups for each of the products P within the predetermined weight range. Though not shown in the drawings, the weighing device 1 has a dispersion table for using vibration to disperse the products P in a radial fashion; a plurality of vibrating feeders positioned radially around the dispersion table; a plurality of pooling hoppers that are positioned in a circle for temporarily storing the products P dropped from the feeder troughs of the vibrating feeders, and an identical number of weighing hoppers positioned below the respective pooling hoppers.

The form-fill-seal device 2 receives the products P that were selected and ejected as a result of the combinatorial calculations performed in the weighing device 1, and packages the products within manufactured bags. Though not shown in the drawings, the form-fill-seal device 2 is provided with a folding mechanism, a vertical sealing mechanism, a conveying mechanism, a cutting mechanism, and a horizontal sealing mechanism. The folding mechanism folds a film sheet, which is pulled off of a film roll, so that both lateral edges are overlaid. The vertical sealing mechanism heat-seals the overlaid parts of the folded film sheet and forms a tubular body. The conveying mechanism conveys the tubular body in the longitudinal direction for a predetermined distance in a state in which the tubular body is held from either side in the widthwise direction. The cutting mechanism cuts the tubular body to a predetermined size. The horizontal sealing mechanism seals the cut opening of the tubular body after cutting. The weighed products P that have been ejected from the weighing device 1 are placed into the tubular body while the tubular body is being conveyed by the conveying mechanism in the form-fill-seal device 2.

The weight checker 3, the seal checker 4, and the boxing apparatus 5 perform a variety of checks on the products P, which have been inserted into manufactured bags, and/or pack the products into boxes of checked products. The weight checker 3, e.g., checks whether the weight of products P, which have been combinatorially weighed and inserted into a bag in the weighing device 1, is within the permissible range. The seal checker 4 checks the sealed portions of the bag in order to verify whether the bag manufactured in the form-fill-seal device 2 is sealed. The boxing apparatus 5 packs into cardboard boxes the bags containing the products P that have been judged to be normal. The configuration of the weight checker 3 will be described in detail hereinafter.

Though not shown in the drawings, the feeding apparatus 6 is provided with a feeding conveyor, a driving mechanism, and a feed-volume detection sensor. The driving mechanism causes an endless conveyor to rotate in the feeding conveyor, whereby the products P that have been placed on the conveyor are conveyed onto the dispersion feeder of the weighing device 1.

### [Configuration of the weight checker 3]

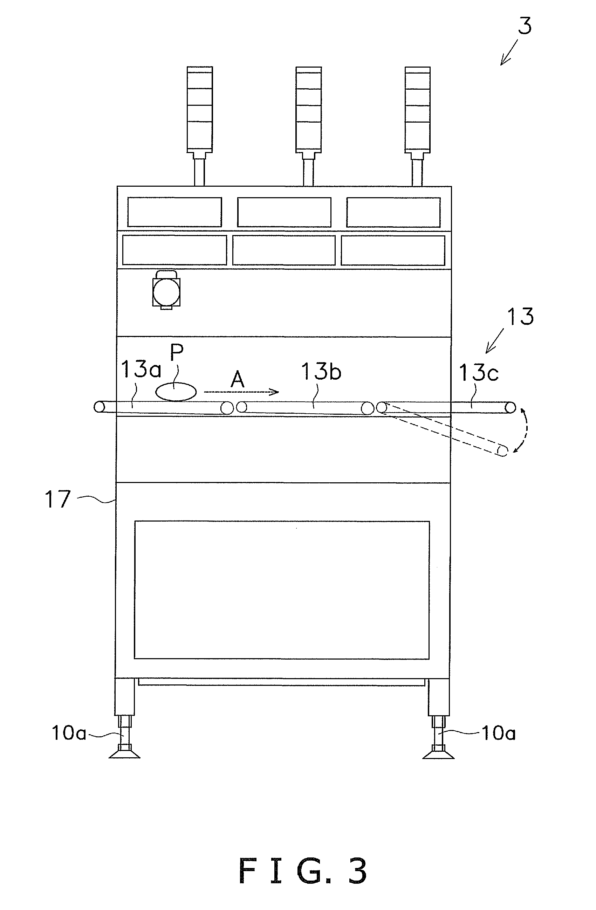

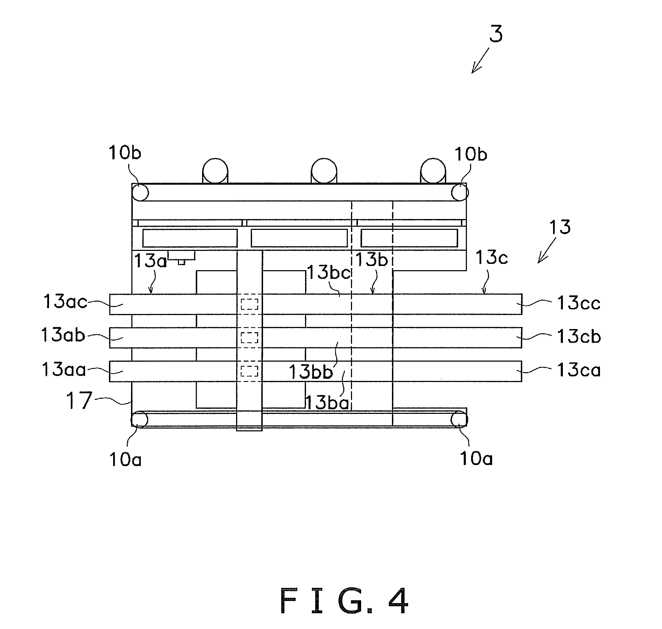

The weight checker 3 according to the present embodiment is positioned as one of the apparatuses that constitute the production line, as shown in FIG. 1. The weight checker weighs the products P and judges whether the products are defective or non-defective while conveying in the direction of an arrow A in a conveying device 13. After making a judgment, the weight checker 3 selects only those of the products P that were judged non-defective and conveys those products toward the seal checker 4 positioned downstream. The weight checker 3 is provided with the flat-belt conveying device 13, a load cell 15 for weighing the products P, a chassis 17, a pair of forward and rear leg parts 10a, 10b for immobilizing the chassis 17, and a control part (control part, detecting part) 20, as shown in FIGS. 3 and 4.

The conveying device 13 is provided with, from the upstream side in the conveying direction A of the products P, a first conveying part (conveying part, uptake conveyor) 13a, a second conveying part (conveying part, weighing conveyor) 13b, and a third conveying part (conveying part, sorting conveyor) 13c, as shown in FIG. 3. The first through third conveying parts 13a through 13c are further configured so as to include respective groups of three conveyors 13aa through 13ac, 13ba through 13bc, and 13ca through 13cc that are aligned in a direction perpendicular to the conveying direction, as shown in FIG. 4. The configuration of each of the conveying parts 13a through 13c included in the conveying device 13 will be described in detail hereinafter.

The load cell 15 is provided in order to detect changes in strain produced by the weight of the products P conveyed in the conveying device 13, and measure the weight of the products P.

The chassis 17 is supported by the pair of the leg parts 10a, 10b and encapsulates, e.g., the conveying device 13 and/or the load cell 15 and the like.

### (First conveying part 13a)

The first conveying part 13a is positioned the furthest upstream in the conveying direction A and functions as an uptake conveyor for taking up into the apparatus the products P that are sent from the form-fill-seal device 2 and the like that are positioned upstream of the weight checker 3. The first conveying part 13a conveys the products P in the conveying direction A and passes the products P to the second conveying part 13b.

A driving motor M1 is the drive source for the first conveying part 13a and transmits rotational driving force to the conveyors 13aa through 13ac via a drive belt. The driving motor M1 is positioned on a lower part of the conveyors 13aa through 13ac on the furthest upstream side.

### (Second conveying part 13b)

The second conveying part 13b is positioned between the first conveying part 13a and the third conveying part 13c. At this point the products P are weighed using the load cell (weighing part) 15 while being conveyed.

A driving motor M2 is the drive source for the second conveying part 13b and transmits rotational driving force to the conveyors 13ba through 13bc via a drive belt. The driving motor M2 is positioned on a lower part of the three conveyors 13ba through 13bc that are provided between the furthest upstream conveyors 13aa through 13ac and the furthest downstream conveyors 13ca through 13cc, as shown in FIG. 4.

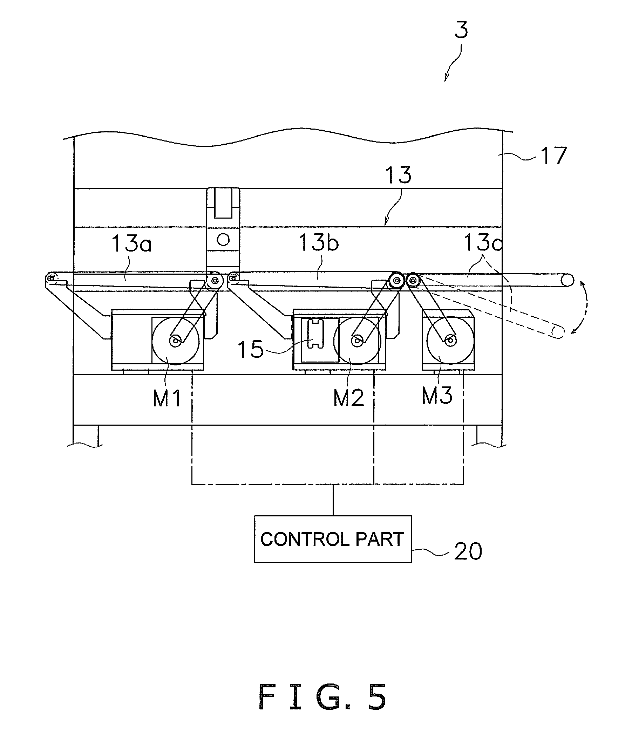

The load cell 15 detects changes in strain produced when the products P are placed on the conveyors 13ba through 13bc, and weighs the products P placed on the conveyors 13ba through 13bc. The load cell 15 is positioned in an orientation such that the longitudinal direction is along the conveying direction A in the inside part of the chassis 17, in the same manner as the driving motor M2, as shown in FIG. 5.

### (Third conveying part 13c)

The third conveying part 13c is positioned furthest downstream in the conveying direction A and rotates around the furthest-upstream end part, as shown in FIG. 3. The products P are thereby sorted on the basis of the weighing results in the second conveying part 13b. Specifically, when the weighing results of the second conveying part 13b are within a predetermined weight range, the third conveying part 13c is in a substantially horizontal state shown by the solid line in FIG. 3, and the products P (non-defective products) are conveyed downstream without interference. However, when the measurement results of the second conveying part 13b are outside the predetermined weight range, the third conveying part 13c is rotated to the downward-inclined state shown by the dotted line in FIG. 3, and the products P (defective products) are conveyed to a prescribed conveyance offshoot.

A driving motor M3 is the drive source for the third conveying part 13c and transmits rotational driving force to the conveyors 13ca through 13cc via a drive belt. The driving motor M3 is positioned on a lower part of the conveyors 13ca through 13cc on the furthest downstream side.

### (Control part 20)

The control part 20 is connected to the driving motors M1 through M3 of the conveying parts 13a through 13c, as shown in FIG. 5. The control part controls, e.g., the conveying speed of the products P in the conveying device 13. Specifically, the control part 20 appropriately controls conveyance in the first through third conveying parts 13a through 13c according to the conveying conditions of the products P that are conveyed from upstream.

More specifically, the control part 20 receives detection signals from various apparatuses via the communication line 11 (see FIG. 2) for the products P in the apparatuses (the weighing device 1 and the form-fill-seal device 2) positioned upstream in the production line configured by the production system 100. When the control part 20 does not receive detection signals for the products P for a continuous period of time equal to or greater than a predetermined period, the conveying device 13 is controlled so that the conveying speed of the conveying parts 13a through 13c is reduced. This speed-reduction control also involves completely stopping the conveyance of at least one of the conveying parts 13a through 13c.

### < Speed-reduction control of the conveying device 13 by the control part 20 >

The control part 20 in the present embodiment appropriately controls conveyance in the first through third conveying parts 13a through 13c included in the conveying device 13 according to the reception state of the detection signals for the products P received from the weighing device 1, the form-fill-seal device 2, and the like that are positioned upstream, as described above.

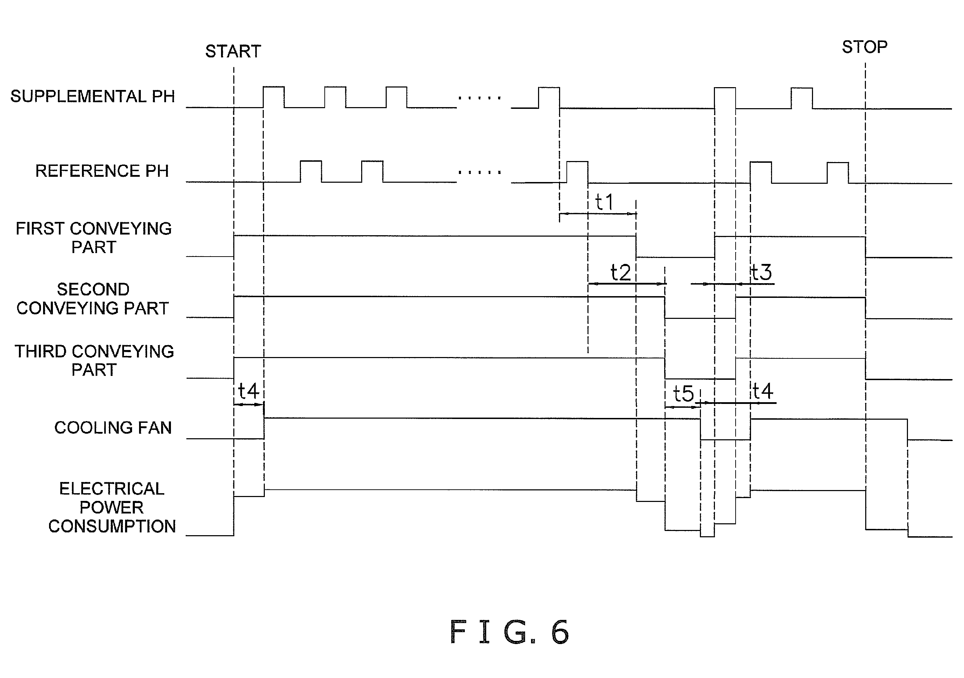

Specifically, as shown in FIG. 6, after initiating the apparatus, the control part 20 causes a cooling fan (not shown) to start rotating after a lag of a cooling-fan start time t4.

The control part 20 then receives a reference PH indicating that the products P have been conveyed by a set interval and a supplemental PH that is offset in phase by a predetermined amount from the reference PH, whereby the control part recognizes that the products P are being properly conveyed. The reference PH and the supplemental PH are signals that are received at set intervals, which may be identical. The reference PH and the supplemental PH may have a mutually-offset phase relationship.

When the supplemental PH is not received and a predetermined conveyance-stop lag time t1 has elapsed, the control part 20 first controls the driving motor M1 so that conveyance is stopped in the furthest upstream first conveying part 13a, which takes the products P into the apparatus.

When the reference PH is not received and a predetermined conveyance-stop lag time t2 has elapsed, the control part 20 controls the driving motors M2, M3 so that the conveyance of the second and third conveying parts 13b, 13c is stopped.

After the conveyance-stop lag time t2 has elapsed, and after a further predetermined cooling-fan-stop lag time t5 has elapsed, the control part 20 stops the rotation of the cooling fan.

When the control part 20 once again receives the supplemental PH, the driving motor M1 is first controlled so that conveying is resumed in the first conveying part 13a positioned furthest upstream.

After a predetermined conveying-start lag time t3 has elapsed following receipt of the supplemental PH, the control part 20 controls the motors M2, M3 so that conveying is resumed in the second and third conveying parts 13b, 13c.

After the predetermined cooling-fan start time t4 has elapsed following receipt of the supplemental PH, the control part 20 again causes the cooling fan to start rotating.

In the present embodiment, the stopping and resuming of conveying in the first conveying part 13a positioned furthest upstream is given priority, and the conveying of the second and third conveying parts 13b, 13c is stopped thereafter, as described above.

The products P in the furthest upstream first conveying part 13a can thereby be put in a state of being rapidly conveyable even when conveying of the products P is resumed.

When a continuous period of time equal to or greater than the predetermined period has elapsed and conveying of the products P is not detected, conveying is stopped in all of the conveying parts 13a through 13c while the timing at which conveying is stopped or resumed is shifted, whereby unnecessary electrical power consumption is reduced when the products P are not being conveyed because of, e.g., problems in upstream devices or lot switches, and maximal power conservation can be achieved for the weight checker 3.

### [Characteristics of the present weight checker 3]

### (1)

As shown in FIGS. 3 through 5, the weight checker 3 of the present embodiment is provided with the conveying device 13 for conveying the products P, whose weight is to be checked, in a predetermined direction; the load cell 15 for weighing the products P conveyed in the conveying device 13 (the second conveying part 13b); and the control part 20 for controlling the conveying of the conveying device 13. The control part 20 controls conveying in the conveying device 13 so that the speed is reduced according to the state in which the products P upstream are being conveyed.

When the state in which the products P upstream are being conveyed is such that the conveying of the products P is stopped for a long period due to, e.g., problems in the upstream form-fill-seal device 2 and the like or lot switching, conveying by the conveying device 13 can thereby be rapidly stopped. Therefore, unnecessary operation of the conveying device 13 in a state of unnecessarily conveying the products P can be avoided, and the power of the weight checker 3 can be conserved.

### (2)

When the control part 20 in the weight checker 3 of the present embodiment detects that the products P have not been conveyed from upstream for a period of time equal to or greater than a predetermined period, conveying by the conveying device (the first through third conveying parts 13a through 13c) 13 is stopped, as shown in FIG. 6.

Unnecessary electrical power consumption in a state of unnecessary conveying can thereby be reduced more effectively than with a control for switching the conveying device 13 to convey at a low speed. As a result, the power for the weight checker 3 can be conserved with maximal effectiveness.

### (3)

The control part 20 in the weight checker 3 of the present embodiment maintains the supply of electrical power to the load cell 15, which has the weighing conveyor (the second conveying part 13b), even when the products P have ceased being conveyed from upstream, as shown in FIG. 6.

Decreases in weighing accuracy resulting from temperature changes, and other defects produced from stopping and resuming the power supply in order to achieve power conservation can thereby be avoided in the load cell 15 and the like.

### (4)

The conveying parts subjected to a speed-reduction control in the weight checker 3 of the present embodiment are the first conveying part 13a as the uptake conveyor, the second conveying part 13b as the weighing conveyor, and the third conveying part 13c as a sorting conveyor, as shown in FIG. 5.

The products P that are conveyed from upstream can thereby be smoothly taken up into the apparatus, weighed, and sorted. Power consumption is thereby reduced for the weight checker 3 in which is mounted the conveying device 13 provided with these functions.

### (5)

In the weight checker 3 of the present embodiment, the detection signals for the products P in the weighing device 1 and the form-fill-seal device 2 positioned upstream and mutually connected via the communication line 11 are received, and the control part 20 indirectly apprehends the conveyance condition of the products P, as shown in FIG. 2.

The uptake of the products P can thereby be predicted in advance, and therefore the initiation of speed-reduction control and the first through third conveying parts 13a through 13c can resume conveying more quickly than by directly having the products P detected within the weight checker 3. As a result, the products P can be prevented from accumulating in the weight checker 3, and power consumption can be lowered.

### [Other embodiments]

An embodiment of the present invention was described above, but the present invention is not limited to the aforedescribed embodiment; a variety of modifications can be implemented within a scope that does not depart from the main ideas of the invention.

### (A)

In the aforedescribed embodiment, an example was given and described in which detection signals for the products P in the form-fill-seal device 2 positioned upstream of the weight checker 3 are received, and the products P are detected indirectly, whereby the conveyance condition of the upstream products P is ascertained. However, the present invention is not limited to this configuration.

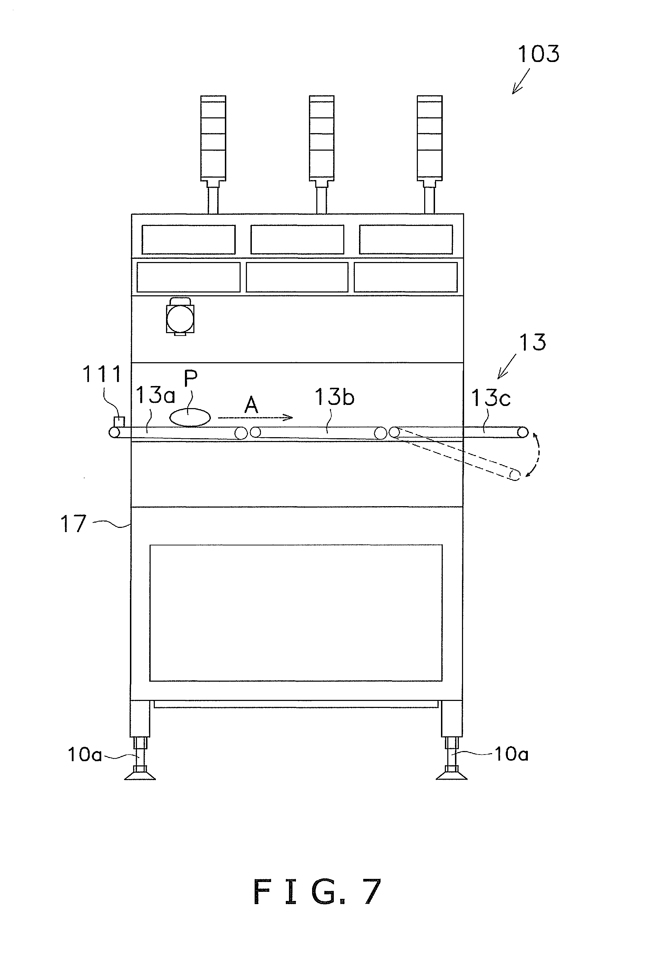

According to another possible configuration, e.g., a sensor (detection part) 111 is positioned near the furthest upstream side within a weight checker (weight-checking apparatus) 103, and the products P conveyed from upstream are detected directly, as shown in FIG. 7. Light-emitting optical elements, infrared sensors, and/or the like positioned so as to flank the conveyance path on either side can be used as the sensor 111.

Uptake of the products P into the furthest upstream side of the weight checker 103 is detected in such instances, and the aforedescribed speed-reduction control of the conveying parts (the first through third conveying parts 13a through 13c) is executed, whereby an effect identical to that described above can be obtained.

However, in a configuration in which the products P are detected using the sensor 111 positioned within the apparatus of the weight checker 103, the products P are initially detected in a state of having been taken into the apparatus. The products P may therefore accumulate in the furthest-upstream first conveying part 13a in a short time even when the first conveying part 13a is started soon after detection. Therefore, in terms of smoothly conveying the products P that are conveyed from upstream, speed reduction of the conveying parts 13a through 13c is more preferably controlled on the basis of signals received from the apparatuses positioned upstream, as in the aforedescribed embodiment.

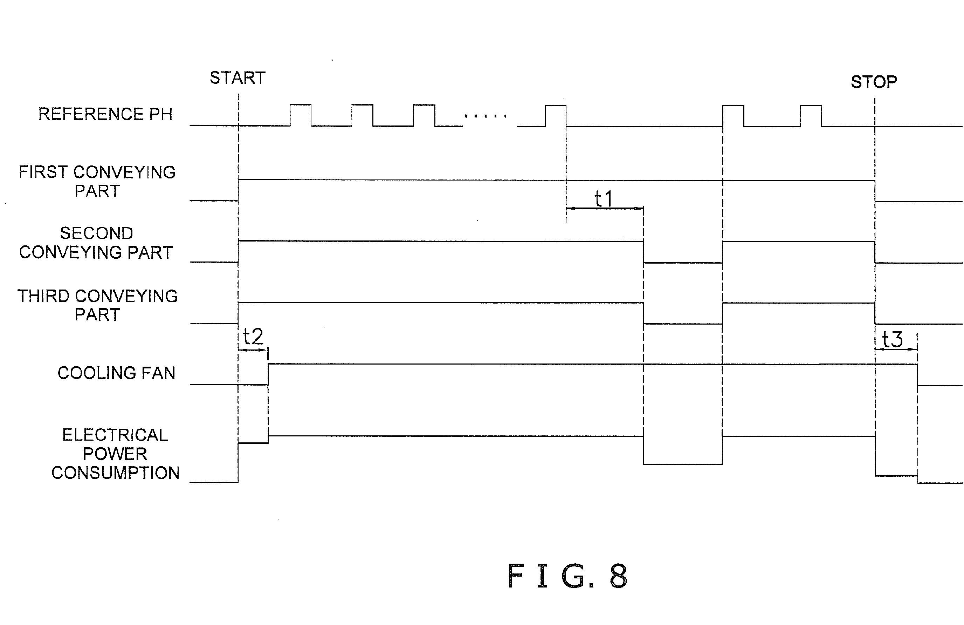

In consideration of the points above, speed-reduction control of the weight checker 103 shown in FIG. 7 is explained in more detail below with reference to FIG. 8.

Specifically, after starting the weight checker 103, the control part 20 causes a cooling fan (not shown) to start rotating after a lag of a cooling-fan-start lag time T2.

The control part 20 then receives the reference PH that indicates that the products P have been conveyed by a set interval, whereby the control part recognizes that the products P are being properly conveyed.

When the reference PH is not received and a predetermined stop lag time T1 has elapsed, the control part 20 controls the driving motors M2, M3 so that the second conveying part 13b and the third conveying part 13c stop conveying, excluding the first conveying part 13a for taking the products P into the apparatus.

When the products P resume being conveyed, the control part 20 receives the reference PH from the form-fill-seal device 2 and the like positioned upstream, and controls the driving motors M2, M3 so that conveying is resumed in the second and third conveying parts 13b, 13c.

When the control part 20 receives a stop signal for the weight checker 103, a control is performed so that the cooling fan stops after a cooling-fan-stop lag time T3.

In the configuration of the present embodiment, the sensor 111 that acts as the detection part is provided within the weight checker 103, as described above. A control is performed so that conveying is performed continuously in the first conveying part 13a positioned furthest upstream, and conveying in the second and third conveying parts 13b, 13c is stopped.

This enables the products P to be in a conveyable state in the furthest-upstream first conveying part 13a even when the conveying of products P from upstream resumes. Conveying in the second and third conveying parts 13b, 13c positioned downstream is stopped, whereby unnecessary power consumption can be reduced when the products P are not being conveyed due to, e.g., problems in the upstream devices or lot switches, as shown in FIG. 8. As a result, the products P can be prevented from accumulating upon resumption of conveying from upstream, and the power for the weight checker 3 can be conserved.

### (B)

In the aforedescribed embodiments, examples were given and described in which conveying by the conveying device 13 (the first through third conveying parts 13a through 13c) is stopped when a state in which the products P are not conveyed continues for a predetermined period of time. However, the present invention is not limited to this configuration.

Instead of the conveying by the conveying parts being stopped, a control may also be performed so that, e.g., a switch is made to a slower speed than during normal conveyance.

The conveying apparatus can also consume less power in such instances than in a normal operational state, and therefore electrical power consumption in a non-conveying state can be reduced.

The control part may also perform a control while switching between stopping and reducing the speed of conveying by the conveying parts. The type of speed-reduction control (stopping, speed reduction) can in such instances be switched according to the conveyance condition of the products; e.g., whether the conveying of products from upstream is frequently stopped for long periods or stopped only rarely and for short periods.

### (C)

Examples were given and described in the aforedescribed embodiments in which the conveying device 13 (the first through third conveying parts 13a through 13c) and the cooling fan are subjected to a power-conservation control. However, the present invention is not limited to this configuration.

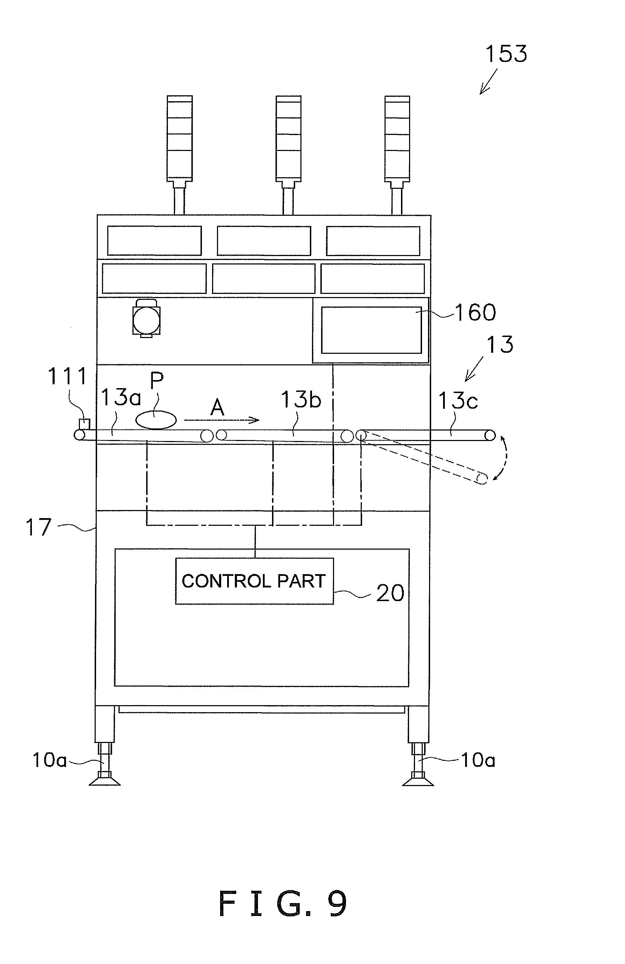

As shown in, e.g., FIG. 9, a monitor 160 positioned on the front surface of a weight checker 153 may also be connected to the control part 20 so as to be subjected to power-conservation control in a manner identical to the conveying device 13 and the like.

The control part 20 in such instances performs a control so that the display power of the monitor 160 is stopped when no products are conveyed from upstream for a period of time equal to or greater than a predetermined period, whereby further power conservation can be achieved than in a configuration in which only the conveying device 13 and the cooling fan are to be controlled.

### (D)

Examples were given and described in the aforedescribed embodiments in which conveying is stopped in all of the conveying parts (the first through third conveying parts 13a through 13c) within the conveying device 13 when a state in which the products P are not conveyed continues for a predetermined period of time. However, the present invention is not limited to this configuration.

For example, instead of conveying being stopped in all of the conveying parts, conveying may be continued in the furthest-upstream first conveying part 13a, as in the aforedescribed other embodiment (A), and only the second and third conveying parts 13b, 13c may be controlled to be reduced in speed or stopped.

However, from the standpoint of maximally reducing electrical power consumption in a state in which products are not conveyed, a control is more preferably performed so that conveying is stopped in all of the conveying parts to the extent possible.

### (E)

Examples were given and described in the aforedescribed embodiments in which three conveying parts are used as the plurality of conveying parts mounted in the weight checker 3, the three conveying parts being the first conveying part 13a as an uptake conveyor, the second conveying part 13b as a weighing conveyor, and the third conveying part 13c as a sorting conveyor. However, the present invention is not limited to this configuration.

For example, the present invention can also be applied in the same manner to other types of conveyors.

The present invention can also be applied to cases in which the number of conveying parts is not just three but one, two, and/or four or more conveying parts.

### INDUSTRIAL APPLICABILITY

The weight-checking apparatus of the present invention demonstrates the effects of reducing the consumption of unnecessary electrical power during periods in which the apparatus is not functioning as a weight-checking apparatus and of allowing significantly greater power conservation than obtained using conventional technology. Therefore, the invention can be widely applied to, e.g., weight-checking apparatuses that include conveying devices.

### REFERENCE SIGNS LIST

- 1: Weighing device
- 2: Form-fill-seal device
- 3: Weight checker (weight-checking apparatus)
- 4: Seal checker
- 5: Boxing apparatus
- 6: Feeding apparatus
- 10a, 10b: Leg parts
- 11: Communication line
- 13: Conveying device
- 13a: First conveying part (conveying part, uptake conveyor)
- 13aa through 13ac: Conveyors
- 13b: Second conveying part (conveying part, weighing conveyor)
- 13ba through 13bc: Conveyors
- 13c: Third conveying part (conveying part, sorting conveyor)
- 13ca through 13cc: Conveyors
- 15: Load cell
- 17: Chassis
- 20: Control part (control part, detection part)
- 100: Production system
- 103: Weight checker (weight-checking apparatus)
- 111: Sensor (detection part)
- 153: Weight checker (weight-checking apparatus)
- 160: Monitor
- M1 through M3: Driving motors
- P: Products (objects to be checked)
- t1, t2: Stop lag times
- t3: Start lag time
- t4: Cooling-fan-start lag time
- t5: Cooling-fan-stop lag time
- T1: Stop lag time
- T2: Cooling-fan-start lag time
- T3: Cooling-fan-stop lag time

### CITATION LIST

### PATENT LITERATURE

[Patent Document 1] Japanese Laid-Open Patent Application No. 2006-322750 (published November 30, 2006)

## Claims

1. A weight-checking apparatus for checking weight while conveying an object to be checked in a predetermined direction, the weight-checking apparatus comprising:
a conveying part for conveying the object to be checked in the predetermined direction;
a weighing part for weighing the object to be checked; and
a control part for controlling the conveying part so that speed is reduced to a predetermined conveying speed according to a conveyance condition of the object to be checked, the object being conveyed from upstream.

2. The weight-checking apparatus according to claim 1, wherein the predetermined conveying speed also includes a stopped state.

3. The weight-checking apparatus according to claim 1 or 2, wherein the control part performs a control while selectively switching between a mode for reducing conveying speed and a mode for stopping conveying, the conveying speed being reduced by the conveying part in the mode for reducing conveying speed, and conveying being stopped by the conveying part in the mode for stopping conveying.

4. The weight-checking apparatus according to any one of claims 1 to 3, wherein the control part performs a control so that an electrical power supply is maintained to the weighing part irrespective of the conveyance condition of the object to be checked.

5. The weight-checking apparatus according to any one of claims 1 to 4, wherein the conveying part comprises an uptake conveyor, a weighing conveyor, and a sorting conveyor.

6. The weight-checking apparatus according to any one of claims 1 to 5, further comprising a detection part for directly detecting the object to be checked, the object being conveyed from upstream.

7. The weight-checking apparatus according to any one of claims 1 to 6, further comprising a detection part for receiving detection results for the object to be checked in a variety of apparatuses positioned upstream and for indirectly detecting the object to be checked, the object being conveyed from upstream.

8. The weight-checking apparatus according to any one claims 1 to 7, further comprising:
a display part for making a display related to checks performed on the object to be checked, wherein
the control part stops the electrical power supply to the display part until the object to be checked is conveyed from upstream.
